# EUROPEAN PATENT SPECIFICATION

(11) **EP 2 431 319 B1**
(45) Date of publication and mention of the grant of the patent: **12.01.2022**
(21) Application number: 11380070.0
(22) Date of filing: 15.09.2011
(51) Int. Cl.: B66B 23/00, B66B 23/02, B66B 23/14, B66B 21/00

(54) **Accessible transport system for moving passengers and/or goods**
Begehbares Transportsystem zum Transport von Passagieren und/oder Waren
Système de transport accessible pour déplacer des passagers et/ou des marchandises

(30) Priority: 15.09.2010 ES 201031368
(43) Date of publication of application: 21.03.2012
(73) Proprietor: TK Elevator Innovation Center S.A., 33203 Gijon - Asturias (ES)
(72) Inventor: Gonzalez Alemany, Miguel, Angel, 33007 Oviedo (ES); Gonzalez Fernandez, Enrique, 33203 Gijon Asturias (ES); Ros Zuazua, Pedro, 33013 Oviedo asturias (ES); Gonzalez Pantiga, Juan Domingo, 33212 Gijon asturias (ES)
(74) Representative: Michalski Hüttermann & Partner Patentanwälte mbB

(56) References cited:
- ES-A1- 2 333 640
- JP-A- 2 075 523
- US-A- 3 610 160
- US-A- 3 918 367

## Description

### Field of the Invention

The present invention relates to different product configurations fitting within the field of transport systems for people and goods. These configurations of transport for people provide constructive improvements, space improvements and better energy consumption with respect to the existing systems and have the objective of facilitating the installation and start up of new accessible transport systems for people and/or goods.

### Background of the Invention

On the market of transport systems for people and/or goods, the use limitations for disabled people or people with reduced mobility, the elderly/children or for people transporting diverse objects are known. Such passengers of the transport system object of the invention currently represent a growing percentage.

Currently, these known limitations are solved with the combination of systems such as escalators with vertical elevation equipment like elevators, or with individual platforms with discontinuous movement or also with escalators the operation of which is interrupted to increase the support surface by means of the horizontal combination of steps. These already tried solutions have different drawbacks, including the cost and the complexity in the civil construction of the elevator/escalator assembly, or in the case of individual platforms, the dependence on skilled operators.

Further, another type of transport systems exists such as those called inclined elevators which allow complete accessibility, but which have certain limitations in terms of passenger flow capacity and civil works construction and space difficulties.

Until now the proposed solutions for accessible systems are along two principle lines: a first line is centered on multiplatform systems requiring a complex mechanical system and a considerable constructive volume; a second line of accessible systems incorporating auxiliary elements of less constructive difficulty and providing greater accessibility to conventional systems but without overcoming limitations in terms of the capacity and ease of use.

For these reasons, the need to find new transport systems for people that are accessible, with the capacity to move considerable passenger flows and that have notable constructive and consumption improvements for the purpose of improving the efficiency and sustainability of current transport systems is detected.

ES 2 333 640 A1 refers to a conveyor system for the transportation of passengers/goods formed by a bearing structure, a loading/unloading area and a traction equipment, which also comprises mobile platforms dragged by the traction equipment, for the reception and transport of passengers/goods from a loading area to an unloading area. The mobile platforms have side walls to define a compartment and prevent passengers/goods from interfering with the guiding device thereof in a carryway, from a loading area to an unloading area, and in a return way, from an unloading area to a loading area.

### Description of the Invention

The invention is defined by the independent claims. Dependent claims refer to modified embodiments. A first aspect relates to a transport system for people/goods, comprising two platforms being moved on guides by means of rollers installed in the structure of the platform. These two platforms are connected to a drive roller chain that is also guided. The assemblies of guides are assembled on a bearing structure by means of supports. These platforms are connected in a symmetrical position with respect to each other, such that the length of the trajectory covered by each platform to the next state of the operating cycle is the same, L1 = L2. This trajectory is defined by the situation of the guidance system. In addition, these platforms describe a closed and continuous, point-to-point, reversible movement without intermediate stops operated by drive equipment. Since the platforms are arranged symmetrically, they will be positioned such that if the first platform is in the passenger loading position, the second platform will be in the passenger unloading state. Once the operating cycle has started, i.e., the first platform ascending passengers and the second one returning to the loading position, this second platform will act as a counterweight for the first platform, which can translate into a notable reduction of the power necessary for moving the system, i.e., the system only consumes the power necessary for moving the passenger load. In the return path, the platform returns from the unloading area to the loading area with its floor parallel to the inclined plane for reducing the space necessary in the pit of the return path. The return path ends in the horizontal position for facilitating its positioning with respect to the passenger loading state. For placing the platform in the guides of the return path a system is used comprising a wheel with notches having a geometry similar to a gear wheel, in the notches of which the rollers of the rear shaft of the platform are supported for achieving the overturning of the platform, and a drive pinion operating the roller chain which is rigidly connected to the platform by means of a hook. The overturn wheel and the drive pinion stabilize and determine the movement of the platform from the unloading position to the initial position of the return path. Therefore, by means of this movement, the platform is positioned with the floor parallel to the inclined plane determined by the loading and unloading area. The lower part of the system, i.e., the loading area, comprises two wheels with the same diameter for moving the platform in the horizontal position from the end of the return path to the loading position.

To achieve complete comfort for the passenger, the initial ascending movement of the platform must be performed with the platform in the horizontal position and its initial movement is produced with the platform ascending in the inclined plane. In addition, passenger loading and unloading is also performed with the platform in the horizontal position. In the initial movement of the cycle, the platform starts the path in the inclined sector and finishes the path horizontally in the unloading area. When the first platform reaches the unloading area, the second platform will already be arranged to begin loading passengers.

The system of the invention is reversible, i.e., it is able to function in both directions. The system of the invention can be used in areas for overcoming unevenness or in areas of horizontal movement where loading and unloading are at the same level.

In the case of needing to increase the transport flow capacity of people and/or goods, another two platforms can be added in the system the relative positioning of which follows the same positional symmetry pattern between platforms as in the case of two platforms. In other words, the two additional platforms are also located symmetrically along the path and both are anchored to a second drive roller chain. The second drive roller chain is different from the drive chain of the two initial platforms and the second drive roller chain controlled by a second motor, so the resulting system has two drive chains and two motors. The drive roller chains are located on both sides of the platforms and the motors are located in the upper part of the system, near the unloading area. The tensor devise of the tensor chain is arranged in the area opposite the location of the motors. With this operation the flow capacity of the two platform system initially described is substantially increased, since the positioning time between platforms for loading is reduced.

Similarly to the first system with 2 platforms, this second alternative with 4 platforms is applicable for different types of unevenness, from those where the unevenness between the loading and unloading areas is appreciable, as well as those where the unevenness is less or even non-existent.

The system can operate continuously, at times of high passenger flow, and intermittently, when the passenger flow decreases, such that energy consumption is optimized and the service life of the system is extended.

Auxiliary doors or floor doors can be included in the loading/unloading areas as a safety measure so that the passenger cannot access the system while the latter is moving. These floor placements can be located before the loading and unloading areas or in a position contiguous to that which the doors of the platform occupy in the loading/unloading position.

The invention improves the accessibility and the ease of use of transport systems for passengers/goods, and it mitigates the inherent risks in systems incorporating auxiliary components. The principle features of the invention are the following:
- Increase of the transport flow capacity of passengers compared to inclined elevators and other point-to-point transport systems such as people mover shuttle trains.
- Energy consumption reduction and civil work reduction.
- Accessible system
- Reduction of possible contacts of passengers in the platform with fixed parts of the system.
- Continuous and point-to-point system, i.e., without intermediate stations.

The transport system of the invention comprises several subsystems. Firstly, it has a bearing structure configured for absorbing different loads transmitted by the platforms and the different elements integrating the drive equipment, the electric equipment and the passenger loading and unloading areas. The balustrade is assembled on this bearing structure on both sides of the platform configured for preventing the access of people from the exterior in the loading/unloading areas and for preventing falls to a different level.

The two accessible movable platforms comprise a compartment formed by a floor and side walls selected from fixed and movable options. In turn, the platform has, integrated in its front entrance/exit areas, protective doors to protect against the goods and/or passengers falling forwards or backwards. The opening and closing operation of these doors is described below. The movable platform can also include handrails on the side walls for increasing the safety and comfort of the passengers.

The rollers integral with the movable platforms are configured for rolling on a guiding device assembled on supports attached to the bearing structure. The arrangement of these rollers allows the ascent/descent/movement of the movable platform during the transport movement of passengers/goods along the useful path maintaining the platform in the horizontal position.

In addition, the movement of the movable platform pairs is carried out by means of a common drive system for each movable platform pair, since each movable platform pair is connected to a drive roller chain.

The loading and unloading areas comprise an area fit for the entrance/exit of passengers to/from the movable platform. These loading and unloading areas can have floor doors configured for preventing the passage of the passengers to the system when it is in operation.

The operating mechanism of the platform doors can be selected from many deployment/retraction devices and they are incorporated into and move with the platforms.

In reference to the control means, these can be centralized from an electrical board controlling and processing all the data sent from the loading and unloading areas (opening and closing of doors) and from the motor operating the drive chains of each platform pair.

As for the safety equipment: it comprises presence sensors in risk areas, loading/unloading and trajectory areas, for protecting the passenger from any contact with unauthorized elements of the system, the system being automatically stopped.

One aspect of the invention relates to a transport system for passengers/goods as defined in the set of claims.

### Brief Description of the Drawings

A series of drawings which help to better understand the invention and its improvement which are expressly related with an embodiment of said invention presented as a non-limiting example thereof is very briefly described below.

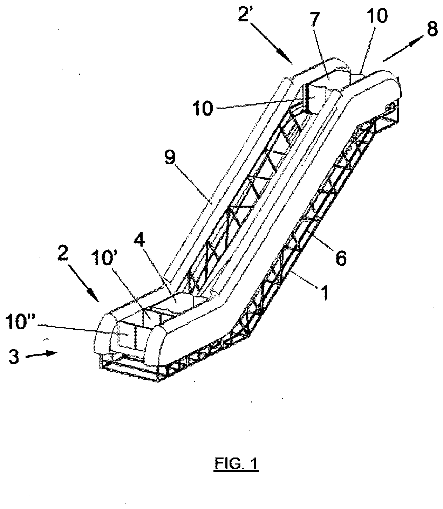

Figure 1 shows a perspective view of the system of the invention.

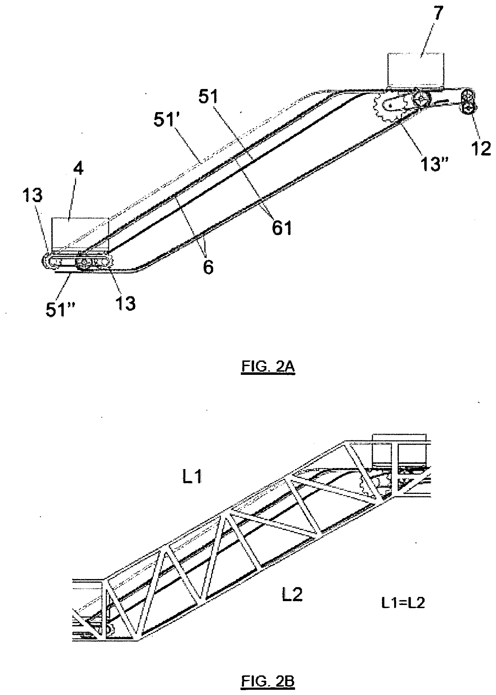

Figure 2A shows a side view of the system of the invention.
Figure 2B shows a side view of the system of the invention where the symmetrical arrangement of the 2 platforms with respect to the drive chain is illustrated.
Figure 3A shows a detailed view of the upper part of the system.
Figure 3B shows a detailed view of the lower part of the system.

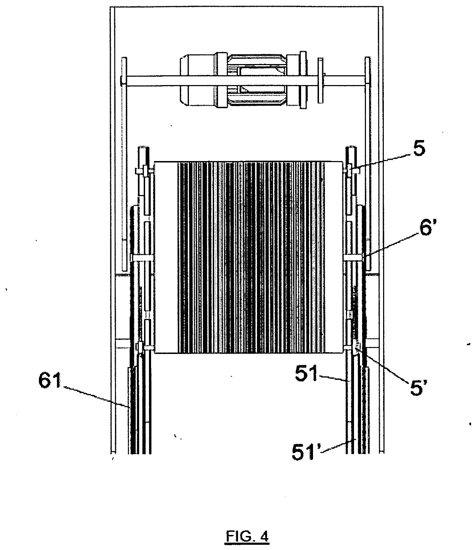

Figure 4 is a plan view showing the guiding systems of the rollers of the platform and the guiding systems of the drive chains and the drive chains.

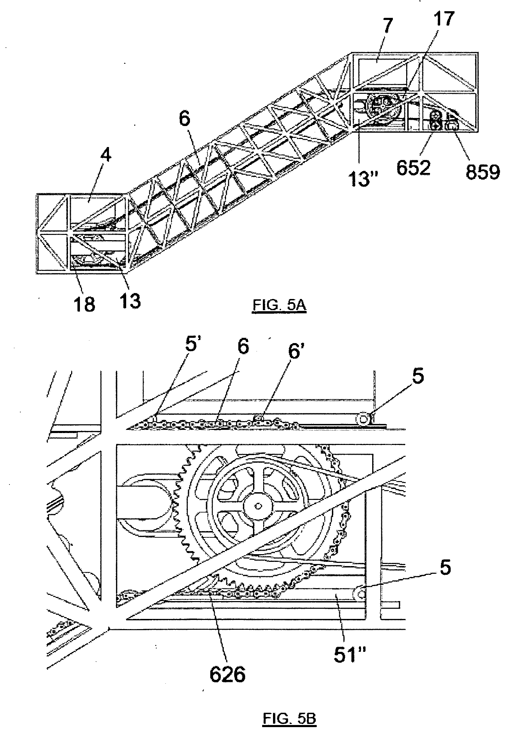

Figure 5A shows a side view of the system improved with more platforms.
Figure 5B shows a detailed side view of the system improved with more platforms in the unloading area.

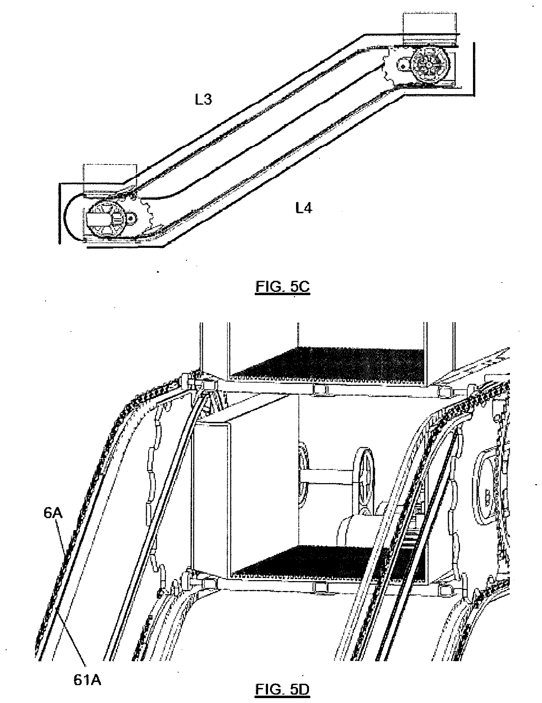

Figure 5C shows a side view of the system of the invention where the symmetrical arrangement of the 4 platforms with respect to the drive chain is illustrate.
Figure 5D shows a perspective view of the system of the invention where the second drive chain and the guide of the second drive chain is illustrated.

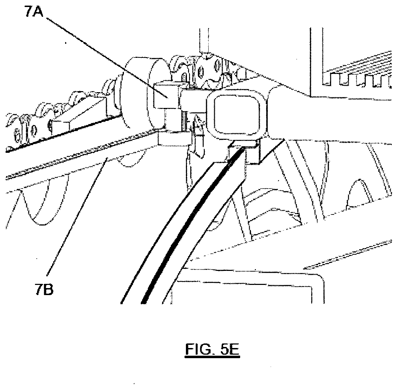

Figure 5E shows a detailed perspective view of the system of the invention where the runner and the guiding track of the runner is illustrated.

### Description of Preferred Embodiments of the Invention

One embodiment of the invention relates to an accessible transport system for moving passengers and/or goods comprising:
1a) a bearing structure (1):
   1a1) comprising a plurality of fixings configured for supporting a plurality of guides (51, 51', 51", 61);
1b) a first drive chain (6) configured for being guided between first guides (61) along a trajectory comprising:
   1b1) a useful path from a loading position to an unloading position; the useful path can comprise fairings (9) on the sides for preventing access of the passengers to unauthorized areas
   1b2) a return path from a post-unloading position to a pre-loading position;
   1b3) overturn curves in a loading area (2) and in an unloading area (2'), between the useful path and the return path, the trajectory defining a guiding path of the first drive chain (6);
1c) a plurality of platforms (4, 7, 17, 18) comprising guiding elements (5, 5') and drive elements (6') in outer side walls of the platforms (4, 7, 17, 18) comprising:
   1c1) front rollers (5) configured for being guided by:
      1c1a) front side platform guides (51) in the useful path;
      1c1b) side platform return guides (51") in the return path;
   1c2) rear rollers (5') configured for being guided by:
      1c2a) rear side platform guides (51') in the useful path;
      1c2b) side platform return guides (51") in the return path;
   1c3) connectors (6') configured for being driven by the first drive chain (6);
1d) drive equipment (12) configured for moving the platforms (4, 7, 17, 18) according to a reversible, closed and continuous point-to-point movement without intermediate stops;
   wherein:
   1e) the front side platform guides (51) and the rear platform guides (51') are arranged for guiding the platforms (4, 7, 17, 18) in the horizontal position along the useful path.

According to other features of the invention:
2a) The side platform return guides (51") are arranged for guiding the platforms (4, 7, 17, 18) in a position parallel to the useful path along the return path, from a post-unloading position at the beginning of the return path to a pre-loading position at the end of the return path for reducing pit depth.
3a) A first platform (4) and a second platform (7) are located on the first drive chain (6) symmetrically with respect to the first drive chain (6) wherein:
   3a1) the length of the first drive chain (6) between attachment fixings for the attachment to the first platform (4) and to the second platform (7) is the same in both directions, L1 = L2;
   3a2) when the first platform (4) is in the loading position, the second platform (7) is in the unloading position;
   3a3) when the first platform (4) is transporting passengers from the loading position to the unloading position, the second platform (7) is returning from the unloading position to the loading position, acting as a counterweight of the first platform (4) for reducing the power of the drive equipment (12).
4. The transport system comprises two first drive chains (6), one on each side of the system for driving the platforms (4, 7) symmetrically without generating a turning torque in the platforms (4, 7).
5a) A first platform (4) and a second platform (17) are located on the first drive chain (6) symmetrically with respect to the first drive chain (6) such that:
   5a1) the length of the first drive chain (6) between attachment fixings for attachment to the first platform (4) and to the second platform (17) is the same in both directions, L1 = L2;
   5a2) when the first platform (4) is in the loading position, the second platform (17) is in the post-unloading position; the post-unloading position is that in which the second platform (17) has already gone from the position of the unloading position at the beginning of the return path after being overturned;
   5a3) when the first platform (4) is transporting passengers from the loading position to the unloading position, the second platform (17) is returning from the post-unloading position to the loading position, acting as a counterweight of the first platform (4) for reducing the power of the drive equipment (12);
5b) a second drive chain (6A) configured for being guided between second guides (61A) along a trajectory comprising:
   5b1) a useful path from a loading position to an unloading position;
   5b2) a return path from the unloading position to the loading position;
   5b3) overturn curves in a loading area (2) and in an unloading area (2') between the useful path and the return path, the trajectory defining a guiding path of the second drive chain (6A);
5c) a third platform (7) and a fourth platform (18) are located on a second drive chain (6A) symmetrically with respect to the second drive chain (6A) such that:
   5c1) the length of the second drive chain (6A) between attachment fixings for attachment to the third platform (7) and to the fourth platform (18) is the same in both directions, L3 = L4;
   5c2) when the third platform (7) is in an unloading position, the fourth platform (18) is in a pre-loading position; the pre-unloading position is that in which the fourth platform (18) is prepared for going to the loading position at the end of the return path before being moved;
   5c3) when the fourth platform (18) is being moved from the pre-loading position to the loading position, the third platform (7) is being moved from the unloading position to the post-unloading position, acting as a counterweight of the fourth platform (18) for reducing the power of the drive equipment (12).

The second drive chain (6A) is different form the first drive chain (6) so in the embodiment with four platforms, the system has two drive chains (6, 6A), each drive chain (6, 6A) being located on one side of the system. With this embodiment of four platforms the flow capacity of the two platforms system is notably increased, since the positioning time for loading between platforms is substantially reduced. The movement of the four platforms (4, 7, 17, 18) is synchronized. The first chain (6) driving the first platform (4) and the second platform (17) is operated by a first motor (652). The second chain (6A) driving the third platform (7) and the fourth platform (18) is operated by a second motor (859).
6. The first drive chain (6) is guided in a first side of the system and the second drive chain (6A) is guided in a second side of the system.
7. The transport system further comprises guiding means wherein a runner (7A) is guided in a track (7B) for compensating for a turning torque in the platforms (4, 7, 17, 18).
8. The transport system comprises in the unloading area (2'):
   8a) an overturn wheel (13") configured for engaging with the rear rollers (5');
   8b) a drive pinion (15) configured for driving the chain (6, 6A);
      for moving a platform (4, 7, 17, 18):
   8c) from an unloading position at the end of the useful path, where:
      8c1) the platform (4, 7, 17, 18) is placed in a horizontal position;
      8c2) the front rollers (5) are placed in the front platform guides (51);
      8c3) the rear rollers (5') are placed in the rear platform guides (51');
   8d) to a post-unloading position at the beginning of the return path, where:
      8d1) the platform (4, 7, 17, 18) is placed in a position parallel to the useful path;
      8d2) the front rollers (5) and the rear rollers (5') are placed in the platform return guides (51").
9. The transport system comprises in the loading area (2):
   9a) a running wheel (13) configured for engaging with rollers selected from the front rollers (5) and the rear rollers (5'); the system can additionally comprise a second running wheel (13) for engaging with the front rollers (5) or rear rollers (5'), not engaging with the first running wheel (13);
   9b) a guiding pinion (15') configured for guiding the chain (6, 6A);
      for moving a platform (4, 7, 17, 18):
   9c) from a pre-loading position at the end of the return path, where:
      9c1) the platform (4, 7, 17, 18) is placed in a horizontal position;
      9c2) the front rollers (5) and the rear rollers (5') are placed in the platform return guides (51");
   9d) to a loading position at the beginning of the useful path, where:
      9d1) the platform (4, 7, 17, 18) is placed in a horizontal position;
      9d2) the front rollers (5) are placed in the front platform guides (51);
      9d3) the rear rollers (5') are placed in the rear platform guides (51').
10. The transport system further comprises:
   10a) auxiliary/floor doors (10', 10") in loading/unloading areas (2) configured for being moved by operating means between an open position and a closed position, for regulating an entrance/exit of passengers to the system preventing an entrance/exit of passengers to/from the platform (4, 7, 17, 18) while the system is not in loading/unloading positions. The platforms also include doors for regulating the entrance/exit of passengers to/from the platforms, referred to as platform doors (10).
11. The auxiliary platform doors (10') are moved by operating means to a/an:
   11a) closed position for preventing a passage of passengers from the loading area (2) to a space configured for being occupied by a platform in the loading position (4), the system being in a loading entrance state;
   11b) open position for allowing a passage of passengers from the loading area (2) to the platform in the loading position (4), the system being in a platform loading state;
   11 c) open position for allowing an exit of passengers from the platform in the unloading position (7) to the unloading area (2'), the system being in a platform unloading state;
   11d) closed position for preventing a passage of passengers from the unloading area (2') to a space configured for being occupied by a platform in the unloading position (7), the system being in an unloading exit state.
12. The auxiliary system doors (10") are moved by operating means to a/an:
   12a) open position for allowing an entrance (3) of passengers to the loading area (2);
   12b) closed position for preventing an entrance (3) of passengers to the loading area (2);
   12c) closed position for preventing a return of passengers to the unloading area (2');
   12d) open position for allowing an exit (8) of passengers from the unloading area (2').
13. The transport system further comprises: a plurality of counterguides (626) configured for guiding an element selected from the front rollers (5), the rear rollers (5') and combinations thereof, for guiding a movement of the platform (4, 7, 17, 18) in overturn areas.

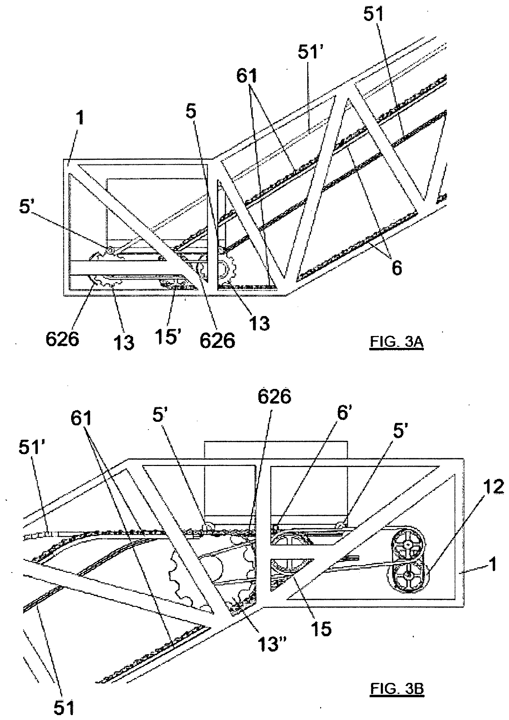

The overturn areas comprise the unloading area (2'), where the post-unloading platform (17) is driven from the useful path to the return path and the loading area, where the pre-loading platform (18) is driven from the return path to the useful path. As can be seen in Figures 3A, 3B, the counterweights (626) can guide only the front rollers (5), only the rear rollers (5') or both. On the other hand, the counterweights (626) can be located in either of the 2 overturn areas or in both.

## Claims

1. An accessible transport system for moving passengers and/or goods, **characterized in that** it comprises:
1a) a bearing structure (1):
1a1) comprising a plurality of fixings configured for supporting a plurality of guides (51, 51', 51", 61);
1b) a first drive chain (6) configured for being guided between first guides (61) along a trajectory comprising:
1b1) a useful path from a loading position to an unloading position;
1b2) a return path from a post-unloading position to a pre-loading position;
1b3) overturn curves in a loading area (2) and in an unloading area (2'), between the useful path and the return path, the trajectory defining a guiding path of the first drive chain (6);
1c) a plurality of platforms (4, 7, 17, 18) comprising guiding elements (5, 5') and drive elements (6') comprising:
1c1) front rollers (5) configured for being guided by:
1c1a) front platform guides (51) in the useful path;
1c1b) platform return guides (51") in the return path;
1c2) rear rollers (5') configured for being guided by:
1c2a) rear platform guides (51') in the useful path;
1c2b) platform return guides (51") in the return path;
1c3) connectors (6') configured for being driven by the first drive chain (6);
1d) drive equipment (12) configured for moving the platforms (4, 7, 17, 18) according to a reversible, closed and continuous point-to-point movement without intermediate stops;
wherein:
1e) the front platform guides (51) and the rear side platform guides (51') are arranged for guiding the platforms (4, 7, 17, 18) in the horizontal position along the useful path,
wherein the transport system further comprises
5a) a first platform (4) and a second platform (17) are located on the first drive chain (6) symmetrically with respect to the first drive chain (6) such that:
5a1) the length of the first drive chain (6) between attachment fixings for attachment to the first platform (4) and to the second platform (17) is the same in both directions, L1 = L2;
5a2) when the first platform (4) is in the loading position, the second platform (17) is in the post-unloading position;
5a3) when the first platform (4) is transporting passengers from the loading position to the unloading position, the second platform (17) is returning from the post-unloading position to the loading position, acting as a counterweight of the first platform (4) for reducing the power of the drive equipment (12);
5b) a second drive chain (6A) configured for being guided between second guides (61A) along a trajectory comprising:
5b1) a useful path from a loading position to an unloading position;
5b2) a return path from the unloading position to the loading position;
5b3) overturn curves in a loading area (2) and in an unloading area (2') between the useful path and the return path, the trajectory defining a guiding path of the second drive chain (6A);
5c) a third platform (7) and a fourth platform (18) are located on a second drive chain (6A) symmetrically with respect to the second drive chain (6A) such that:
5c1) the length of the second drive chain (6A) between attachment fixings for attachment to the third platform (7) and to the fourth platform (18) is the same in both directions, L3 = L4;
5c2) when the third platform (7) is in an unloading position, the fourth platform (18) is in a pre-loading position;
5c3) when the fourth platform (18) is being moved from the pre-loading position to the loading position, the third platform (7) is being moved from the unloading position to the post-unloading position, acting as a counterweight of the fourth platform (18) for reducing the power of the drive equipment (12).

2. The accessible transport system for moving people and/or goods of claim 1, **characterized in that**:
2a) the platform return guides (51") are arranged for guiding the platforms (4, 7, 17, 18) in a position parallel to the useful path along the return path, from a post-unloading position at the beginning of the return path to a pre-loading position at the end of the return path for reducing pit depth.

3. The accessible transport system for moving people and/or goods of claim 1, **characterized in that** the first drive chain (6) is guided in a first side of the system and the second drive chain (6A) is guided in a second side of the system.

4. The accessible transport system for moving people and/or goods of any of claims 1-3, **characterized in that** it further comprises guiding means wherein a runner (7A) is guided in a track (7B) for compensating for a turning torque in the platforms (4, 7, 17, 18).

5. The accessible transport system for moving people and/or goods of any of claims 1-4, **characterized in that** in the unloading area (2') it comprises:
8a) an overturn wheel (13") configured for engaging with the rear rollers (5');
8b) a drive pinion (15) configured for driving the chain (6, 6A);
for moving a platform (4, 7, 17, 18):
8c) from an unloading position at the end of the useful path, where:
8c1) the platform (4, 7, 17, 18) is placed in a horizontal position;
8c2) the front rollers (5) are placed in the front platform guides (51);
8c3) the rear rollers (5') are placed in the rear platform guides (51');
8d) to a post-unloading position at the beginning of the return path, where:
8d1) the platform (4, 7, 17, 18) is placed in a position parallel to the useful path;
8d2) the front rollers (5) and the rear rollers (5') are placed in the platform return guides (51").

6. The accessible transport system for moving people and/or goods of any of claims 1-5, **characterized in that** in the loading zone (2) it comprises:
9a) a running wheel (13) configured for engaging with rollers selected from the front rollers (5) and the rear rollers (5');
9b) a guiding pinion (15') configured for guiding the chain (6, 6A);
for moving a platform (4, 7, 17, 18):
9c) from a pre-loading position at the end of the return path, where:
9c1) the platform (4, 7, 17, 18) is placed in a horizontal position;
9c2) the front rollers (5) and the rear rollers (5') are placed in the platform return guides (51");
9d) to a loading position at the beginning of the useful path, where:
9d1) the platform (4, 7, 17, 18) is placed in a horizontal position;
9d2) the front rollers (5) are placed in the front platform guides (51);
9d3) the rear rollers (5') are placed in the rear platform guides (51').

7. The accessible transport system for moving people and/or goods of any of claims 1-6, **characterized in that** it further comprises:
10a) auxiliary/floor doors (10', 10") in loading/unloading areas (2) configured for being moved by operating means between an open position and a closed position, for regulating an entrance/exit of passengers to the system preventing an entrance/exit of passengers to/from the platform (4, 7, 17, 18) while the system is not in loading/unloading positions.

8. The accessible transport system for moving people and/or goods of claim 7, **characterized in that** the auxiliary platform doors (10') are moved by operating means to a/an:
11a) closed position for preventing a passage of passengers from the loading area (2) to a space configured for being occupied by a platform in the loading position (4), the system being in a loading entrance state;
11b) open position for allowing a passage of passengers from the loading area (2) to the platform in the loading position (4), the system being in a platform loading state;
11c) open position for allowing an exit of passengers from the platform in the unloading position (7) to the unloading area (2'), the system being in a platform unloading state;
11 d) closed position for preventing a passage of passengers from the unloading area (2') to a space configured for being occupied by a platform in the unloading position (7), the system being in an unloading exit state.

9. The accessible transport system for moving people and/or goods of claim 8, **characterized in that** the auxiliary system doors (10") are moved by the operating means to a/an:
12a) open position for allowing an entrance (3) of passengers to the loading area (2);
12b) closed position for preventing an entrance (3) of passengers to the loading area (2);
12c) closed position for preventing a return of passengers to the unloading area (2');
12d) open position for allowing an exit (8) of passengers from the unloading area (2').

10. The accessible transport system for moving people and/or goods of any of claims 1-9, **characterized in that** it further comprises: a plurality of counterguides (626) configured for guiding an element selected from the front rollers (5), the rear rollers (5') and combinations thereof, for guiding a movement of the platform (4, 7, 17, 18) in overturn areas.

## Patentansprüche

1. Zugängliches Transportsystem zum Bewegen von Personen und/oder Gütern, **dadurch gekennzeichnet, dass** es aufweist:
1a) eine Tragstruktur (1):
1a1) eine Vielzahl von Befestigungen, die dafür konfiguriert sind, eine Vielzahl von Führungen (51, 51', 51", 61) zu tragen;
1b) eine erste Antriebskette (6), die dafür konfiguriert ist, zwischen ersten Führungen (61) entlang einer Trajektorie geführt zur werden, die aufweist:
1b1) einen nutzbaren Pfad von einer Beladeposition zu einer Entladeposition;
1b2) einen Rücklaufpfad von einer Position nach der Entladeposition zu einer Position vor der Beladeposition;
1b3) Umkehrkurven in einem Beladebereich (2) und in einem Entladebereich (2') zwischen dem nutzbaren Pfad und dem Rücklaufpfad, wobei die Trajektorie einen Führungspfad der ersten Antriebskette (6) definiert;
1c) eine Vielzahl von Plattformen (4, 7, 17, 18) mit Führungselementen (5, 5') und Antriebselementen (6'), die aufweisen:
1c1) vordere Rollen (5), die dafür konfiguriert sind, geführt zu werden durch:
1c1 a) vordere Plattformführungen (51) im nutzbaren Pfad;
1c1b) Plattformrücklaufführungen (51") im Rücklaufpfad;
1c2) hintere Rollen (5'), die dafür konfiguriert sind, geführt zu werden durch:
1c2a) hintere Plattformführungen (51') im nutzbaren Pfad;
1c2b) Plattformrücklaufführungen (51") im Rücklaufpfad;
1c3) Verbinder (6'), die dafür konfiguriert sind, durch die erste Antriebskette (6) angetrieben zu werden;
1d) eine Antriebseinrichtung (12), die dafür konfiguriert ist, die Plattformen (4, 7, 17, 18) gemäß einer reversiblen, geschlossenen und kontinuierlichen Punkt-zu-Punkt-Bewegung ohne Zwischenstopps zu bewegen,
wobei:
1e) die vorderen Plattformführungen (51) und die hinteren seitlichen Plattformführungen (51') dazu eingerichtet sind, die Plattformen (4, 7, 17, 18) in der horizontalen Position entlang des nutzbaren Pfades zu führen,
wobei das Transportsystem ferner aufweist:
5a) eine erste Plattform (4) und eine zweite Plattform (17), die auf der ersten Antriebskette (6) symmetrisch in Bezug auf die erste Antriebskette (6) angeordnet sind, so dass:
5a1) die Länge der ersten Antriebskette (6) zwischen Befestigungselementen zur Befestigung an der ersten Plattform (4) und an der zweiten Plattform (17) in beiden Richtungen gleich ist, L1 = L2;
5a2) wenn sich die erste Plattform (4) in der Beladeposition befindet, die zweite Plattform (17) sich in der Position nach der Entladeposition befindet;
5a3) wenn die erste Plattform (4) Passagiere von der Beladeposition zur Entladeposition transportiert, die zweite Plattform (17) von der Position nach der Entladeposition zur Beladeposition zurückkehrt, wobei sie als ein Gegengewicht der ersten Plattform (4) wirkt, um die Leistung der Antriebseinrichtung (12) zu reduzieren;
5b) eine zweite Antriebskette (6A), die dafür konfiguriert ist, zwischen zweiten Führungen (61A) entlang einer Trajektorie geführt zu werden, die aufweist:
5b1) einen nutzbaren Pfad von einer Beladeposition zu einer Entladeposition;
5b2) einen Rücklaufpfad von der Entladeposition zur Beladeposition;
5b3) Umkehrkurven in einem Beladebereich (2) und in einem Entladebereich (2') zwischen dem nutzbaren Pfad und dem Rücklaufpfad, wobei die Trajektorie einen Führungspfad der zweiten Antriebskette (6A) definiert;
5c) eine dritte Plattform (7) und eine vierte Plattform (18), die auf der zweiten Antriebskette (6A) symmetrisch in Bezug auf die zweite Antriebskette (6A) angeordnet sind, so dass:
5c1) die Länge der zweiten Antriebskette (6A) zwischen Befestigungselementen zur Befestigung an der dritten Plattform (7) und an der vierten Plattform (18) in beiden Richtungen gleich ist, L3 = L4;
5c2) wenn die dritte Plattform (7) sich in einer Entladeposition befindet, die vierte Plattform (18) sich in einer Position vor der Beladeposition befindet;
5c3) wenn die vierte Plattform (18) von der Position vor der Beladeposition zur Beladeposition bewegt wird, die dritte Plattform (7) von der Entladeposition zur Position nach der Entladeposition bewegt wird, wobei sie als Gegengewicht der vierten Plattform (18) wirkt, um die Leistung der Antriebseinrichtung (12) zu reduzieren.

2. Zugängliches Transportsystem zum Bewegen von Personen und/oder Gütern nach Anspruch 1, **dadurch gekennzeichnet, dass**:
2a) die Plattformrücklaufführungen (51") dazu eingerichtet sind, die Plattformen (4, 7, 17, 18) in einer Position parallel zum nutzbaren Pfad entlang des Rücklaufpfades von einer Position nach der Entladeposition am Anfang des Rücklaufpfades zu einer Position vor der Beladeposition am Ende des Rücklaufpfades zu bewegen, um eine Grubentiefe zu reduzieren.

3. Zugängliches Transportsystem zum Bewegen von Personen und/oder Gütern nach Anspruch 1, **dadurch gekennzeichnet, dass** die erste Antriebskette (6) an einer ersten Seite des Systems geführt wird und die zweite Antriebskette (6A) an einer zweiten Seite des Systems geführt wird.

4. Zugängliches Transportsystem zum Bewegen von Personen und/oder Gütern nach einem der Ansprüche 1 bis 3, **dadurch gekennzeichnet, dass** es ferner eine Führungseinrichtung aufweist, wobei ein Läufer (7A) in einer Spur (7B) geführt wird, um ein Drehmoment in den Plattformen (4, 7, 17, 18) auszugleichen.

5. Zugängliches Transportsystem zum Bewegen von Personen und/oder Gütern nach einem der Ansprüche 1 bis 4, **dadurch gekennzeichnet, dass** es im Entladebereich (2') aufweist:
8a) ein Umkehrrad (13"), das dafür konfiguriert ist, mit den hinteren Rollen (5') in Eingriff zu kommen;
8b) ein Antriebsritzel (15), das dafür konfiguriert ist, die Kette (6, 6A) anzutreiben
zum Bewegen einer Plattform (4, 7, 17, 18):
8c) von einer Entladeposition am Ende des nutzbaren Pfades, wo
8c1) die Plattform (4, 7, 17, 18) sich in einer horizontalen Position befindet;
8c2) die vorderen Rollen (5) in den vorderen Plattformführungen (51) angeordnet sind;
8c3) die hinteren Rollen (5') in den hinteren Plattformführungen (51') angeordnet sind;
8d) zu einer Position nach der Entladeposition am Anfang des Rücklaufpfades, wo:
8d1) die Plattform (4, 7, 17, 18) in einer Position parallel zum nutzbaren Pfad angeordnet ist;
8d2) die vorderen Rollen (5) und die hinteren Rollen (5') in den Plattformrücklaufführungen (51") angeordnet sind.

6. Zugängliches Transportsystem zum Bewegen von Personen und/oder Gütern nach einem der Ansprüche 1 bis 5, **dadurch gekennzeichnet, dass** es im Beladebereich (2) aufweist:
9a) ein Laufrad (13), das dafür konfiguriert ist, mit Rollen in Eingriff zu kommen, die aus den vorderen Rollen (5) und den hinteren Rollen (5') ausgewählt sind;
9b) ein Führungsritzel (15'), das dafür konfiguriert ist, die Kette (6, 6A) zu führen
zum Bewegen einer Plattform (4, 7, 17, 18):
9c) von einer Position vor der Entladeposition am Ende des Rücklaufpfades, wo:
9c1) die Plattform (4, 7, 17, 18) sich in einer horizontalen Position befindet;
9c2) die vorderen Rollen (5) und die hinteren Rollen (5') in den Plattformrücklaufführungen (51") angeordnet sind;
9d) zu einer Beladeposition am Anfang des nutzbaren Pfades, wo:
9d1) die Plattform (4, 7, 17, 18) sich in einer horizontalen Position befindet;
9d2) die vorderen Rollen (5) in den vorderen Plattformführungen (51) angeordnet sind;
9d3) die hinteren Rollen (5') in den hinteren Plattformführungen (51') angeordnet sind.

7. Zugängliches Transportsystem zum Bewegen von Personen und/oder Gütern nach einem der Ansprüche 1 bis 6, **dadurch gekennzeichnet, dass** es ferner aufweist:
10a) Hilfs-/Bodentüren (10', 10") in Be-/Entladebereichen (2), die dafür konfiguriert sind, durch eine Betätigungseinrichtung zwischen einer offenen Position und einer geschlossenen Position bewegt zu werden, um einen Eintritt/Austritt von Fahrgästen in das System zu regulieren und einen Eintritt/Austritt von Personen auf die/von der Plattform (4, 7, 17, 18) zu verhindern, während sich das System nicht in der Be-/Entladeposition befindet.

8. Zugängliches Transportsystem zum Bewegen von Personen und/oder Gütern nach Anspruch 7, **dadurch gekennzeichnet, dass** die Hilfsplattformtüren (10') durch eine Betätigungseinrichtung bewegt werden in eine:
11a) geschlossene Position zum Verhindern eines Durchgangs von Fahrgästen vom Beladebereich (2) in einen Raum, der dafür konfiguriert ist, durch eine Plattform in der Beladeposition (4) eingenommen zu werden, wobei sich das System in einem Beladezugangszustand befindet;
11b) offene Position zum Ermöglichen eines Durchgangs von Fahrgästen vom Beladebereich (2) zur Plattform in der Beladeposition (4), wobei sich das System in einem Plattformbeladezustand befindet;
11c) offene Position zum Ermöglichen eines Ausstiegs von Fahrgästen von der Plattform in der Entladeposition (7) zum Entladebereich (2'), wobei sich das System in einem Plattformentladezustand befindet;
11d) geschlossene Position zum Verhindern eines Durchgangs von Fahrgästen vom Entladebereich (2') in einen Raum, der dafür konfiguriert ist, durch eine Plattform in der Entladeposition (7) eingenommen zu werden, wobei sich das System in einem Entlade-/Austrittszustand befindet.

9. Zugängliches Transportsystem zum Bewegen von Personen und/oder Gütern nach Anspruch 8, **dadurch gekennzeichnet, dass** die Hilfssystemtüren (10") durch die Betätigungseinrichtung bewegt werden in eine:
12a) offene Position zum Ermöglichen eines Zutritts (3) von Fahrgästen in den Beladebereich (2);
12b) geschlossene Position zum Verhindern eines Zutritts (3) von Fahrgästen in den Beladebereich (2);
12c) geschlossene Position zum Verhindern einer Rückkehr von Fahrgästen in den Entladebereich (2');
12d) offene Position zum Ermöglichen eines Austritts (8) von Fahrgästen vom Entladebereich (2').

10. Zugängliches Transportsystem zum Bewegen von Personen und/oder Gütern nach einem der Ansprüche 1 bis 9, **dadurch gekennzeichnet, dass** es ferner aufweist: eine Vielzahl von Gegenführungen (626), die dafür konfiguriert sind, ein Element zu führen, das aus den vorderen Rollen (5), den hinteren Rollen (5') und Kombinationen davon ausgewählt ist, zum Führen einer Bewegung der Plattform (4, 7, 17, 18) in Umkehrbereichen.

## Revendications

1. Système de transport accessible pour déplacer des passagers et/ou des biens, **caractérisé en ce qu'**il comporte :
1a) une structure porteuse (1) :
1a1) comportant une pluralité de fixations configurées pour supporter une pluralité de guidages (51, 51', 51", 61);
1b) une première chaîne d'entraînement (6) configurée pour être guidée entre des premiers guidages (61) le long d'une trajectoire qui comporte :
1b1) un trajet utile d'une position de chargement à une position de déchargement ;
1b2) un trajet retour d'une position de post-déchargement à une position de pré-chargement ;
1b3) des courbes de renversement dans une zone de chargement (2) et dans une zone de déchargement (2') entre le trajet utile et le trajet retour, la trajectoire définissant un trajet de guidage de la première chaîne d'entraînement (6) ;
1c) une pluralité de plates-formes (4, 7, 17, 18) comportant des éléments de guidage (5, 5') et des éléments d'entraînement (6') qui comportent :
1c1) des rouleaux avant (5) configurés pour être guidés par :
1c1a) des guidages plate-forme avant (51) dans le trajet utile ;
1c1b) des guidages plate-forme retour (51") dans le trajet retour ;
1c2) des rouleaux arrière (5') configurés pour être guidés par :
1c2a) des guidages plate-forme arrière (51') dans le trajet utile ;
1c2b) des guidages plate-forme retour (51") dans le trajet retour ;
1c3) des raccords (6') configurés pour être entraînés par la première chaîne d'entraînement (6) ;
1d) un équipement d'entraînement (12) configuré pour déplacer les plates-formes (4, 7, 17, 18) selon un déplacement point-à-point réversible, fermé et continu sans arrêts intermédiaires ;
1e) les guidages plate-forme avant (51) et les guidages plate-forme arrière (51') étant disposés pour guider les plates-formes (4, 7, 17, 18) en position horizontale le long du trajet utile,
le système de transport comportant en outre
5a) une première plate-forme (4) et une deuxième plate-forme (17) situées sur la première chaîne d'entraînement (6) symétriquement par rapport à la première chaîne d'entraînement (6), de sorte que :
5a1) la longueur de la première chaîne d'entraînement (6) entre les fixations pour l'attachement à la première plate-forme (4) et à la seconde plate-forme (17) est la même dans les deux directions, L1 = L2 ;
5a2) lorsque la première plate-forme (4) est en position de chargement, la seconde plate-forme (17) est en position de post-déchargement ;
5a3) lorsque la première plate-forme (4) transporte des passagers de la position de chargement à la position de déchargement, la seconde plate-forme (17) retourne de la position de post-déchargement à la position de chargement en agissant comme un contrepoids de la première plate-forme (4) pour réduire la puissance de l'équipement d'entraînement (12) ;
5b) une seconde chaîne d'entraînement (6A) configurée pour être guidée entre des seconds guidages (61A) le long d'une trajectoire qui comporte :
5b1) un trajet utile d'une position de chargement à une position de déchargement ;
5b2) un trajet retour de la position de déchargement à la position de chargement ;
5b3) des courbes de retournement dans une zone de chargement (2) et dans une zone de déchargement (2') entre le trajet utile et le trajet retour, la trajectoire définissant un trajet de guidage de la deuxième chaîne d'entraînement (6A) ;
5c) une troisième plate-forme (7) et une quatrième plate-forme (18) situées sur une deuxième chaîne d'entraînement (6A) symétriquement par rapport à la deuxième chaîne d'entraînement (6A) de sorte que :
5c1) la longueur de la deuxième chaîne d'entraînement (6A) entre les fixations pour l'attachement à la troisième plate-forme (7) et à la quatrième plate-forme (18) est la même dans les deux directions, L3 = L4 ;
5c2) lorsque la troisième plate-forme (7) est dans une position de déchargement, la quatrième plate-forme (18) est dans une position de pré-chargement ;
5c3) lorsque la quatrième plate-forme (18) est déplacée de la position de pré-chargement à la position de chargement, la troisième plate-forme (7) est déplacée de la position de déchargement à la position de post-déchargement en agissant comme un contrepoids de la quatrième plate-forme (18) pour réduire la puissance de l'équipement d'entraînement (12).

2. Système de transport accessible pour déplacer des passagers et/ou des biens selon la revendication 1, **caractérisé en ce que** :
2a) les guidages plate-forme retour (51") sont disposés pour guider les plates-formes (4, 7, 17, 18) dans une position parallèle au trajet utile le long du trajet retour d'une position de post-déchargement au début du trajet retour à une position de pré-chargement à la fin de la trajet retour pour réduire la profondeur de la fosse.

3. Système de transport accessible pour déplacer des personnes et/ou des biens selon la revendication 1, **caractérisé en ce que** la première chaîne d'entraînement (6) est guidée sur un premier côté du système et la seconde chaîne d'entraînement (6A) est guidée sur un second côté du système.

4. Système de transport accessible pour déplacer des personnes et/ou des biens selon l'une quelconque des revendications 1 à 3, **caractérisé en ce qu'**il comporte en outre des moyens de guidage dans lesquels un patin (7A) est guidé dans un rail (7B) pour compenser un couple de rotation dans les plates-formes (4, 7, 17, 18).

5. Système de transport accessible pour déplacer des personnes et/ou des biens selon l'une quelconque des revendications 1 à 4, **caractérisé en ce que**, dans la zone de déchargement (2'), il comporte :
8a) une roue de renversement (13") configurée pour s'engager avec les rouleaux arrière (5') ;
8b) un pignon d'entraînement (15) configuré pour entraîner la chaîne (6, 6A) ;
pour déplacer une plate-forme (4, 7, 17, 18) :
8c) d'une position de déchargement à la fin du trajet utile, où :
8c1) la plate-forme (4, 7, 17, 18) est placée en position horizontale ;
8c2) les rouleaux avant (5) sont placés dans les guidages plate-forme avant (51) ;
8c3) les rouleaux arrière (5') sont placés dans les guidages plate-forme arrière (51') ;
8d) à une position de post-déchargement au début du trajet retour, où :
8d1) la plate-forme (4, 7, 17, 18) est placée dans une position parallèle au trajet utile ;
8d2) les rouleaux avant (5) et les rouleaux arrière (5') sont placés dans les guidages plate-forme retour (51").

6. Système de transport accessible pour déplacer des personnes et/ou des biens selon l'une quelconque des revendications 1 à 5, **caractérisé en ce que**, dans la zone de chargement (2), il comporte :
9a) une roue porteuse (13) configurée pour s'engager avec des rouleaux sélectionnés parmi les rouleaux avant (5) et les rouleaux arrière (5') ;
9b) un pignon de guidage (15') configuré pour guider la chaîne (6, 6A) ;
pour déplacer une plate-forme (4, 7, 17, 18) :
9c) d'une position de pré-chargement à la fin du trajet retour, où :
9c1) la plate-forme (4, 7, 17, 18) est placée en position horizontale ;
9c2) les rouleaux avant (5) et les rouleaux arrière (5') sont placés dans les guidages plate-forme retour (51") ;
9d) à une position de chargement au début du trajet utile, où :
9d1) la plate-forme (4, 7, 17, 18) est placée en position horizontale ;
9d2) les rouleaux avant (5) sont placés dans les guidages plate-forme avant (51) ;
9d3) les rouleaux arrière (5') sont placés dans les guidages plate-forme arrière (51').

7. Système de transport accessible pour déplacer des personnes et/ou des biens selon l'une quelconque des revendications 1 à 6, **caractérisé en ce qu'**il comporte en outre :
10a) des portes auxiliaires/d'étages (10', 10") dans les zones de chargement/ déchargement (2), configurées pour être déplacées entre une position ouverte et une position fermée par des moyens d'actionnement pour réguler une entrée/sortie de passagers du système en empêchant une entrée/sortie de passagers vers/de la plate-forme (4, 7, 17, 18) pendant que le système n'est pas en position de chargement/déchargement.

8. Système de transport accessible pour déplacer des personnes et/ou des biens selon la revendication 7, **caractérisé en ce que** les portes plate-forme auxiliaires (10') sont déplacées par des moyens d'actionnement vers une :
11a) position fermée pour empêcher un passage de passagers de la zone de chargement (2) vers un espace configuré pour être occupé par une plate-forme en position de chargement (4), le système étant dans un état d'entrée de chargement ;
11b) position ouverte pour permettre un passage de passagers de la zone de chargement (2) vers la plate-forme en position de chargement (4), le système étant dans un état de chargement de plate-forme ;
11c) position ouverte pour permettre une sortie de passagers de la plate-forme en position de déchargement (7) vers la zone de déchargement (2'), le système étant dans un état de déchargement de plate-forme ;
11 d) position fermée pour empêcher un passage de passagers de la zone de déchargement (2') vers un espace configuré pour être occupé par une plate-forme en position de déchargement (7), le système étant dans un état de sortie de déchargement.

9. Système de transport accessible pour déplacer des personnes et/ou des biens selon la revendication 8, **caractérisé en ce que** les portes système auxiliaires (10") sont déplacées par les moyens d'actionnement vers une :
12a) position ouverte pour permettre une entrée (3) de passagers dans la zone de chargement (2) ;
12b) position fermée pour empêcher une entrée (3) de passagers dans la zone de chargement (2) ;
12c) position fermée pour empêcher un retour de passagers dans la zone de déchargement (2') ;
12d) position ouverte pour permettre une sortie (8) de passagers de la zone de déchargement (2').

10. Système de transport accessible pour déplacer des personnes et/ou des biens selon l'une quelconque des revendications 1 à 9, **caractérisé en ce qu'**il comporte en outre : une pluralité de contre-guidages (626) configurés pour guider un élément sélectionné parmi les rouleaux avant (5), les rouleaux arrière (5') et des combinaisons de ceux-ci pour guider un déplacement de la plate-forme (4, 7, 17, 18) dans des zones de renversement.
